Europäisches Patentamt

European Patent Office

Office européen des brevets

(11) Veröffentlichungsnummer: **0 224 011 B1**

(12) **EUROPÄISCHE PATENTSCHRIFT**

(45) Veröffentlichungstag der Patentschrift: **07.08.91**

(51) Int. Cl.⁵: **G01P 15/08**

(21) Anmeldenummer: **86114384.0**

(22) Anmeldetag: **17.10.86**

(54) **Messeinrichtung für eine Drehbeschleunigung oder einen Drehwinkel.**

(30) Priorität: **23.11.85 DE 3541454**

(43) Veröffentlichungstag der Anmeldung:
**03.06.87 Patentblatt 87/23**

(45) Bekanntmachung des Hinweises auf die
Patenterteilung:
**07.08.91 Patentblatt 91/32**

(84) Benannte Vertragsstaaten:
**DE FR GB IT**

(56) Entgegenhaltungen:
**DE-A- 2 602 619**
**FR-A- 1 142 139**
**US-A- 1 560 844**

(73) Patentinhaber: **ROBERT BOSCH GMBH**
**Postfach 50**
**W-7000 Stuttgart 1(DE)**

(72) Erfinder: **Dobler, Klaus, Dr.-Ing.**
**Bettäckerstrasse 12**
**W-7016 Gerlingen(DE)**
Erfinder: **Hachtel, Hansjörg, Dipl.-Ing. (FH)**
**Buchenstrasse 4**
**W-7251 Weissach(DE)**

## Beschreibung

Die Erfindung geht aus von einer Meßeinrichtung nach der DE-A 29 51 148. Bei einer derartigen bekannten Einrichtung kann das Drehmoment an der Welle dadurch gemessen werden, daß die relative Verdrehung zweier mit der Welle fest verbundener Körper erfaßt wird. Diese Verdrehung entsteht durch eine Torsion der Welle über ein angelegtes Drehmoment.

Vorteile der Erfindung

Die erfindungsgemäße Meßeinrichtung hat den Vorteil, daß durch die verdrehbare Anordnung eines der Teile auf der Welle deren Drehbeschleunigung bzw. der Drehwinkel gemessen werden kann, und zwar bei äußerst geringem Platzbedarf, so daß die Einrichtung in vorhandene Aggregate integrierbar ist.

Weitere vorteilhafte Ausgestaltungen der Erfindung ergeben sich aus den abhängigen Ansprüchen.

Zeichnung

Ein Ausführungsbeispiel der Erfindung ist in der nachfolgenden Beschreibung und Zeichnung wiedergegeben. Die Zeichnung zeigt in Figur 1 ein erstes Ausführungsbeispiel im Querschnitt dargestellt, in den Figuren 2 und 3 ein zweites Ausführungsbeispiel im Querschnitt und in Ansicht, in den Figuren 4 und 5 ein drittes Ausführungsbeispiel im Querschnitt und Ansicht, und in Figur 6 ein Ausführungsbeispiel mit Gehäuse.

Beschreibung der Ausführungsbeispiele

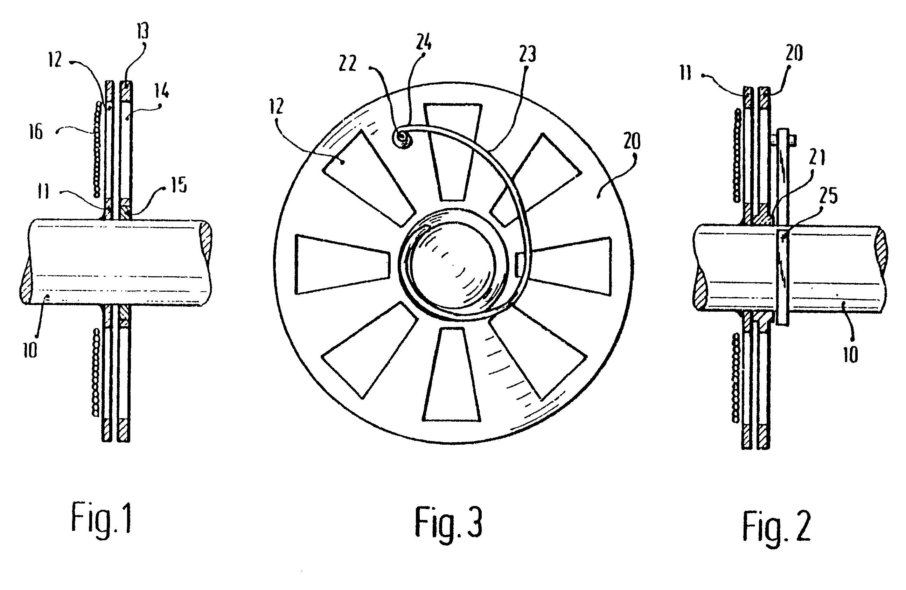

In Figur 1 ist mit 10 eine Welle bezeichnet, auf der eine erste Induktionsscheibe 11 unverdrehbar angeordnet ist, die mehrere radial verlaufende, sektorförmige Schlitze 12 aufweist, wie sie z.B. aus der Figur 3 zu erkennen sind. Weiterhin ist auf der Welle 10 in geringem Abstand zur Induktionsscheibe 11 eine zweite Induktionsscheibe 13 angeordnet, die ebenfalls mehrere radial verlaufende Schlitze 14 aufweist, die genau so ausgebildet sind wie die Schlitze 12. Die Induktionsscheibe 13 ist zweiteilig ausgebildet, und zwar so, daß zwischen ihrem Innendurchmesser und der Welle 10 ein nicht zu schmaler Raum verbleibt, welcher durch einen elastischen, ringförmigen Körper 15 ausgefüllt ist, der einerseits fest mit der Welle verbunden ist, andererseits fest mit der Induktionsscheibe. Dadurch ist die Induktionsscheibe 13 nach außen zunehmend geringfügig gegenüber der Welle 10 verschwenkbar. Die Innenseite des scheibenförmigen Körpers 15 sitzt jedoch stets fest an der Welle 10, ist also an der Berührungsstelle keineswegs verdrehbar.

Der freien Stirnseite der ersten Induktionsscheibe 11 steht eine vorzugsweise einlagig gewickelte Spule 16 gegenüber, die im Raume feststehen kann und von einem hochfrequenten Wechselstrom durchflossen ist. Dieser Wechselstrom erzeugt ein magnetisches Wechselfeld, welches in den beiden Induktionsscheiben 11 und 13 umso mehr Wirbelströme erzeugt, je größer die von dem magnetischen Wechselfeld durchsetzte Fläche der beiden Induktionsscheiben ist. Wenn die Induktionsscheiben zueinander deckungsgleich stehen, d.h. die Schlitze 12 und 14 einander gegenüberliegen, wird die zweite Induktionsscheibe 13 beinahe vollständig von der ersten Induktionsscheibe 11 abgeschirmt. Demzufolge können in dieser Stellung in der zweiten Induktionsscheibe 13 nur geringe Wirbelströme erzeugt werden, was zur Folge hat, daß die Induktivität der Spule 15 verhältnismäß groß ist. In der zweiten Induktionsscheibe 13 werden dann große Wirbelströme erzeugt, wenn die Schlitze 14 bei einer bestimmten Verdrehung hinter den Stegen der ersten Induktionsscheibe verschwinden und die dann hervortretenden Flächen durchsetzt werden. Dies ist dann der Fall, wenn die Welle 10 in nichtstationäre Drehung versetzt wird. Dabei wird der elastische Körper 15 verformt, so daß sich die Induktionsscheibe 13 durch die Beschleunigung etwas verdrehen kann. Bei maximalem Verdrehungswinkel erreicht die Induktivität der Spule 16 ihren niedrigsten Wert. In einem geeigneten Meßgerät, das entsprechend geeicht ist, kann der Verdrehwinkel und die Drehbeschleunigung erfaßt werden.

Das Ausführungsbeispiel nach den Figuren 2 und 3 unterscheidet sich gegenüber dem vorherigen dadurch, daß hier die elastische Verbindung der zweiten Induktionsscheibe - sie ist nun mit 20 bezeichnet - anders ausgebildet ist. Sie hat an ihrer Innenseite einen verbreiterten Steg 21, der unmittelbar gleitend an der Welle 10 anliegt. An der Induktionsscheibe 20 ist an einem Bolzen 22, der zweckmäßigerweise in der Nähe des Außenrandes der Induktionsscheibe liegt, das eine Ende einer Spiralfeder 23 befestigt, deren anderes Ende 25 an der Welle befestigt ist. Auf diese Weise ist die zweite Induktionsscheibe 20 ebenfalls wieder federnd mit der Welle 10 verbunden. Wenn die Welle 10 nichtstationär gedreht wird, tritt wiederum eine Beschleunigungskraft auf, durch welche die zweite Induktionsscheibe 20 gegenüber der ersten 11 verdreht wird, wodurch wieder dieselbe Erscheinung wie oben geschildert, eintritt.

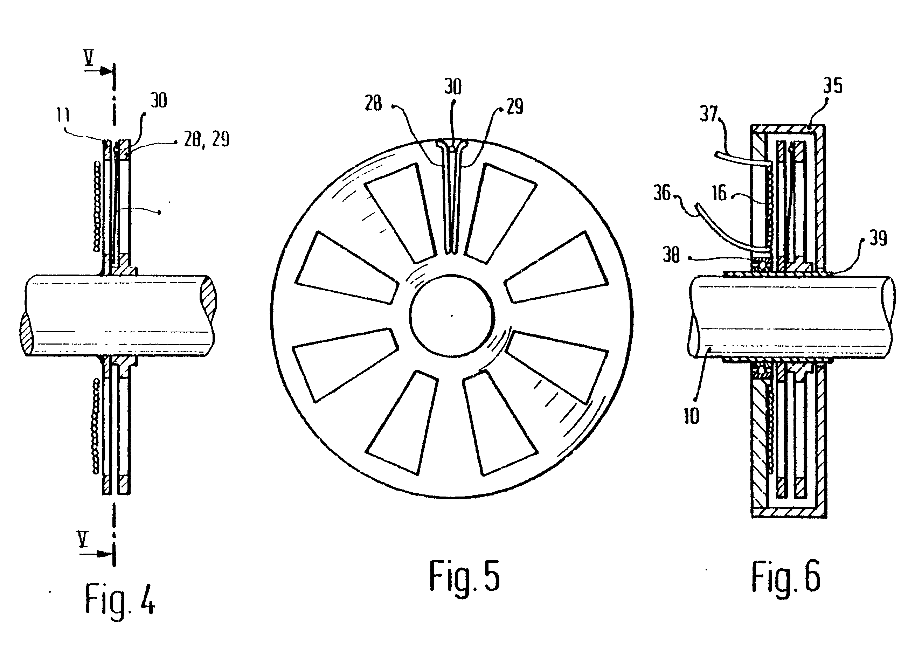

Das Ausführungsbeispiel nach den Figuren 4 und 5 gleicht weitgehend demjenigen nach den Figuren 2 und 3, d.h. die zweite Induktionsscheibe 20 ist ebenso ausgebildet. Der Unterschied besteht darin, daß an der der zweiten Induktionsscheibe 20 zugeordneten Stirnseite der ersten Induktionsscheibe 11 nahe ihrem Innendurchmesser zwei nebeneinanderliegende Federdrähte 28, 29 befestigt sind, die sich radial nach außen bis etwa zum Außendurchmesser der Scheiben erstrecken und nahe ihrem äußeren Ende zwischen sich einen Bolzen 30 aufnehmen, welcher an der zweiten Induktionsscheibe 20 befestigt ist. Auf diese Weise ist diese wiederum bei einem Beschleunigungsvorgang gegenüber der ersten Induktionsscheibe verdrehbar.

Das Ausführungsbeispiel nach Figur 6 zeigt eine konstruktive Anordnung für die Meßeinrichtung, und zwar bezogen im wesentlichen auf das Ausführungsbeispiel nach den Figuren 4 und 5. Die beiden Induktionsscheiben sind hier in einem zylindrischen, die Welle 10 umgebenden Gehäuse 35 angeordnet, an dessen einer Stirnseite sich die Spule 16 befindet, von der die beiden Stromzuführungsleitungen 36, 37 nach außen führen. Das Gehäuse 35 ist mittels eines Kugellagers 38 auf einer Hülse 39 gelagert. Die gesamte Anordnung wird zu Meßzwecken auf die Welle 10 geschoben und über eine geeignete Klemm-, Schraub- oder Klebeverbindung mit ihr verbunden.

Selbstverständlich sind noch andere Möglichkeiten der nachgiebigen Anordnung der zweiten Induktionsscheibe denkbar, z. B. derart, daß die beiden Körper als ineinanderliegende, konzentrische Hülsen ausgebildet sind.

## Patentansprüche

1. Meßeinrichtung zur berührungsfreien dynamischen Erfassung eines Drehwinkels bzw. einer Drehbeschleunigung an einer rotierenden Welle mit zwei zu dieser koaxial angeordneten Körpern (11, 13) aus elektrisch leitendem, vorzugsweise nicht magnetischem Werkstoff, von welchen ein erster Körper (11) mit der Welle (10) unverdrehbar verbunden und der zweite Körper (13) die Welle (10) gegenüber verdrehbar ist, und mit einer zur Welle wenigstens annähernd koaxialen, von hochfrequentem Wechselstrom durchflossenen Spule (1), die in unmittelbarer Nähe der beiden Körper angeordnet ist, wobei die Körper (11, 13) radial verlaufende Ausschnitte (12, 14) aufweisen, deren gemeinsame Überdeckungsfläche sich mit zunehmenden, zwischen den beiden Körpern auftretenden Verdrehwinkeln ändert, so daß durch Messung der Impedanzänderung der Spule, die durch in den Körpern entstehende Wirbelströme = Wirbelstrom-Effekt - und/oder - bei aus ferromagnetischen Stoffen bestehenden Körpern (11, 13) - durch Änderung der Permeabilität = induktiver Effekt - verursacht wird, die relative Verdrehung der beiden Körpern erfaßbar ist, wobei zur direkten Erfassung der Drehbeschleunigung der zweite Körper (13, 20) über ein federndes Mittel (15, 23; 28, 29) gegenüber dem ersten Körper verdrehbar ist.

2. Einrichtung nach Anspruch 1, dadurch gekennzeichnet, daß der zweite Körper (13, 20) über das federnde Mittel (15, 23) mit der Welle verbunden ist.

3. Einrichtung nach Anspruch 2, dadurch gekennzeichnet, daß der Innendurchmesser des zweiten verdrehbaren Körpers (13) wesentlich größer ist als der Durchmesser der Welle und daß der verbleibende Raum von einem elastischen Körper (15) ausgefüllt ist, der einerseits am festen Körper (13), andererseits an der Welle (10) befestigt ist.

4. Einrichtung nach Anspruch 1, dadurch gekennzeichnet, daß der verdrehbare Körper über ein federndes Mittel, z.B. eine Spiralfeder (23), mit der Welle gekoppelt ist.

5. Einrichtung nach Anspruch 1, dadurch gekennzeichnet, daß die beiden Körper über ein federndes Mittel miteinander verbunden sind, z.B. über sich radial erstreckende, am feststehenden Körper (11) befestigte Federdrähte (28, 29), die an einem am verdrehbaren Körper (20) befestigten Bolzen (30) anliegen.

6. Einrichtung nach einem der Ansprüche 1 bis 5, dadurch gekennzeichnet, daß die beiden Körper als Scheiben ausgebildet sind.

7. Einrichtung nach einem der Ansprüche 1 bis 5, dadurch gekennzeichnet, daß die beiden Körper als ineinanderliegende, konzentrische Hülsen ausgebildet sind.

8. Einrichtung nach einem der Ansprüche 1 bis 7, dadurch gekennzeichnet, daß sich die Körper auf einem drehbaren in der Welle angeordneten Gehäuse (35) befinden.

9. Einrichtung nach einem der Ansprüche 1 bis 8, dadurch gekennzeichnet, daß die Ausschnitte (12, 14) der beiden, insbesondere scheibenförmigen Körper, im Ausgangsstand annähernd halb überdeckend zu den Ausschnitten des anderen Körpers liegen.

## Claims

1. Measuring device for contactless dynamic measurement of an angle of rotation or a rotational acceleration of a rotating shaft having two members (11, 13), arranged coaxially therewith, made of electrically conductive, preferably non-magnetic material, of which a first member (11) is connected non-twistably to the shaft (10) and the second member (13) is twistable with respect to the shaft (10), and having a coil (1), which is at least approximately coaxial with the shaft, traversed by a highfrequency alternating current and is arranged in the immediate vicinity of the two members, the members (11, 13) having radially extending cutouts (12, 14), the common overlap surface of which varies with an increase in the angles of rotation occurring between the two members, so that it is possible to sense the relative twisting of the two members by measuring the impedance variation of the coil, which is caused by eddy currents arising in the members - eddy-current effect - and/or - in the case of members (11, 13) consisting of ferromagnetic materials - by variation in the permeability - inductive effect -, it being possible for the second body (13, 20) to be twisted with respect to the first body via a resilient means (15, 23; 28, 29) for the purpose of direct sensing of the rotational acceleration.

2. Device according to Claim 1, characterised in that the second member (13, 20) is connected to the shaft via the resilient means (15, 23).

3. Device according to Claim 2, characterised in that the internal diameter of the second twistable member (13) is substantially larger than the diameter of the shaft, and in that the remaining space is filled by an elastic member (15), which is fixed, on the one hand, to the fixed body (13), and on the other hand to the shaft (10).

4. Device according to Claim 1, characterised in that the twistable member is coupled to the shaft via a resilient means, for example a helical spring (23).

5. Device according to Claim 1, characterised in that the two members are connected to one another via a resilient means, for example via radially extending spring wires (28, 29), which are fixed to the fixed member (11), and bear against a bolt (30) fixed to the twistable member (20).

6. Device according to one of Claims 1 to 5, characterised in that the two members are constructed as discs.

7. Device according to one of Claims 1 to 5, characterised in that the two members are constructed as concentric bushings situated one inside the other.

8. Device according to one of Claims 1 to 7, characterised in that the members are situated on a housing (35) arranged rotatably in the shaft.

9. Device according to one of Claims 1 to 8, characterised in that the cutouts (12, 14) of the two, in particular disc-shaped, members are situated in the initial state approximately half covering the cutouts of the other member.

**Revendications**

1. Appareil de mesure pour détecter de manière dynamique, sans contact, un angle de rotation ou une accélération rotationnelle sur un axe rotatif comportant deux organes (11, 13) montés coaxialement à l'axe, ces organes étant en un matériau conducteur d'électricité, de préférence non magnétique, le premier organe (11) étant relié solidairement à l'axe (10) et le second organe (13) pouvant tourner par rapport à l'axe (10), et au moins une bobine (1) traversée par un courant alternatif à haute fréquence, cette bobine étant au moins approximativement coaxiale à l'axe et se trouve au voisinage immédiat des deux organes, les organes (11, 13) ayant des découpes radiales (12, 14) dont la surface de recouvrement commune varie en fonction de l'angle de rotation entre les deux organes pour qu'en mesurant la variation d'impédance de la bobine engendrée par les courants de Foucault (effets de courants de Foucault) créés dans les organes et/ou dans le cas d'organes (11, 13) en matière ferromagnétique, par variation de la perméabilité (effet par induction), on puisse détecter la rotation relative des deux organes et pour la détection directe de l'accélération rotationnelle, le second organe (13, 20) peut tourner par rapport au premier organe grâce à un moyen à ressort (15, 23, 28, 29).

2. Appareil selon la revendication 1, caractérisé en ce que le second organe (13, 20) est relié à l'axe par un moyen à ressort (15, 23).

3. Appareil selon la revendication 2, caractérisé en ce que le diamètre intérieur du second organe tournant (13) est beaucoup plus grand que le diamètre de l'axe et en ce que l'intervalle résiduel est rempli par un organe élastique (15) fixé d'une part solidairement à l'organe (13) et d'autre part solidairement à l'axe (10).

**4.** Appareil selon la revendication 1, caractérisé en ce que l'organe tournant est couplé à l'axe par des moyens à ressort comme par exemple un ressort spirale (23).

**5.** Appareil selon la revendication 1, caractérisé en ce que les deux organes sont reliés par des moyens à ressort comme par exemple des fils à ressort (28, 29) dirigés radialement et qui sont fixés à l'organe fixe (11), fils contre lesquels s'appuie un téton (30) solidaire de l'organe tournant (20).

**6.** Appareil selon l'une des revendications 1 à 5, caractérisé en ce que les deux organes sont en forme de disques.

**7.** Appareil selon l'une des revendications 1 à 5, caractérisé en ce que les deux organes sont des douilles concentriques placées l'une dans l'autre.

**8.** Appareil selon l'une des revendications 1 à 7, caractérisé en ce que les organes sont montés sur un boîtier (35) tournant par rapport à l'axe.

**9.** Appareil selon l'une des revendications 1 à 8, caractérisé en ce que les fentes (12, 14) des deux organes notamment en forme de disques, se recouvrent pratiquement à demi, en position initiale, par rapport aux fentes de l'autre organe.

Fig.1

Fig.3

Fig.2

EP 0 224 011 B1

Fig. 6

Fig. 5

Fig. 4